# EUROPÄISCHE PATENTSCHRIFT

(11) **EP 3 628 580 B1**
(45) Veröffentlichungstag und Bekanntmachung des Hinweises auf die Patenterteilung: **21.07.2021**
(21) Anmeldenummer: 18197558.2
(22) Anmeldetag: 28.09.2018
(51) Int. Cl.: B62M 6/50, B62M 6/55, B62J 45/421, B62J 45/411

(54) **ELEKTRISCHER PEDELEC-TRETLAGERANTRIEB**
ELECTRICAL PEDELEC CRANK DRIVE
BOÎTIER DE PÉDALIER ÉLECTRIQUE POUR PEDELEC

(43) Veröffentlichungstag der Anmeldung: 01.04.2020
(73) Patentinhaber: Amprio GmbH, 41460 Neuss (DE)
(72) Erfinder: Misgeld, Berno J.E., 41460 Neuss (DE); Greven, Dietmar, 41460 Neuss (DE)
(74) Vertreter: terpatent Patentanwälte ter Smitten Eberlein-Van Hoof Rütten Daubert

(56) Entgegenhaltungen:
- US-A1- 2013 049 549
- US-A1- 2016 375 957

## Beschreibung

Die Erfindung bezieht sich auf einen elektrischen Pedelec-Tretlagerantrieb für ein Fahrrad.

Ein Pedelec-Tretlagerantrieb arbeitet rein unterstützend, ist also nur unterstützend aktiv, wenn der Fahrrad-Fahrer eine Tretbewegung ausführt. Der Tretlagerantrieb weist eine Antriebseinheit auf, die einen elektrischen Antriebsmotor in einem Antriebseinheits-Gehäuse aufweist. Im Unterschied zu Fahrrad-Nabenantrieben muss bei einem Tretlagerantrieb die Temperatur des Antriebseinheits-Gehäuses nach oben begrenzt werden, um Haut-Verbrennungen bei Hautkontakt mit dem Antriebseinheits-Gehäuse auszuschließen. Die gesetzlichen Vorschriften in Deutschland sehen daher beispielsweise vor, dass die Gehäusetemperatur eine Grenztemperatur von 60 °C nicht überschreiten darf.

Bekannte Pedelec-Tretlagerantriebe sind mit Antriebssteuerungen und einem in dem Antriebseinheits-Gehäuse vorgesehenen Temperatur-Sensor ausgestattet, und begrenzen die maximal zur Verfügung stehende Antriebsleistung bei zunehmender Annäherung an die Gehäuse-Grenztemperatur beispielsweise schrittweise nach einem festen Schema.

Beim einem sportlichen Regel-Schema, das erst kurz vor Erreichen der Grenztemperatur eingreift, kommt es daher vor, dass die Gehäusetemperatur die Grenztemperatur erreicht, sodass dann unvermittelt überhaupt keine motorische Antriebsleistung mehr zur Verfügung steht. Bei einem konservativ ausgelegten Regel-Schema, das schon bei relativ niedrigen Gehäusetemperaturen zurückhaltend eingreift, wird zwar die Grenztemperatur in der Regel nicht erreicht, allerdings wird hierdurch auch unterstützende motorische Antriebsleistung verschenkt. Dokument US 2013/049549 offenbart den Oberbegriff des Anspruchs 1.

Aufgabe der Erfindung ist es, einen elektrischen Pedelec-Tretlagerantrieb mit einem verbesserten Gehäusetemperatur- Steuerungsmodul zu schaffen.

Diese Aufgabe wird erfindungsgemäß gelöst mit einem elektrischen Pedelec-Tretlagerantrieb mit den Merkmalen des Anspruchs 1.

Der elektrische Pedelec-Tretlagerantrieb weist eine Antriebseinheit mit einem unterstützenden elektrischen Antriebsmotor in einem Antriebseinheits-Gehäuse auf. Dem Antriebseinheits-Gehäuse ist ein Gehäusetemperatur-Sensor thermisch zugeordnet, der die Gehäusetemperatur exakt ermittelt. Der Gehäusetemperatur-Sensor ist beispielsweise innenseitig unmittelbar an dem Antriebseinheits-Gehäuse angebracht, das beispielsweise aus Metall besteht und außenseitig Kühlrippen aufweisen kann. Insbesondere ist der Gehäusetemperatur-Sensor an einer Seitenwand des Antriebseinheits-Gehäuses angebracht, die ungefähr in der Fahrrad-Längsebene liegt und an eine Tretkurbel angrenzt bzw. dieser zugewandt ist.

Dem Tretlagerantrieb ist eine Antriebssteuerung zugeordnet, die den Antriebsmotor mit elektrischer Energie versorgt, also insbesondere eine Steuerungselektronik und einer Leistungselektronik aufweisen kann. Die Antriebssteuerung ist nicht notwendigerweise innerhalb des Antriebseinheits-Gehäuses angeordnet, ist jedoch bevorzugt innerhalb des Antriebseinheits-Gehäuses angeordnet. Alternativ kann insbesondere die Steuerungselektronik in einem separaten Bediengerät außerhalb des Antriebseinheits-Gehäuses angeordnet sein, das beispielsweise am Fahrradlenker angebracht werden kann.

Grundsätzlich wird die aktuelle elektrische Antriebsenergie mit einer Grundregelung nach einer festgelegten Regel geregelt, beispielsweise nach einem Algorithmus geregelt. Beispielsweise kann die festgelegte Regel der Grundregelung einen einfachen proportionalen Zusammenhang zwischen der Tretleistung des Fahrers und der Antriebsleistung des Antriebsmotors festlegen. Der Proportionalitäts-Faktor kann schrittweise oder stufenlos über ein Bediengerät einstellbar sein. Die generell maximal zur Verfügung stehende Antriebsleistung des Antriebsmotors ist jedoch stets auf beispielsweise 250 W begrenzt.

Die Antriebssteuerung weist ein Gehäusetemperatur-Steuerungsmodul auf, das mit dem Gehäusetemperatur-Sensor über eine Signalverbindung informell verbunden ist und das die elektrische Antriebsenergie derart steuert und begrenzt, dass die tatsächliche Gehäusetemperatur eine konstante Gehäuse-Grenztemperatur Tmax nicht überschreitet. Die Gehäuse-Grenztemperatur kann beispielsweise ungefähr 60 °C betragen.

Außerhalb des Antriebseinheits-Gehäuses ist ein Umgebungstemperatur-Melder vorgesehen, der die lokale Lufttemperatur außerhalb des Antriebseinheits-Gehäuses meldet oder detektiert, und der über eine Signalverbindung informell mit dem Gehäusetemperatur-Steuerungsmodul verbunden ist. Der Umgebungstemperatur-Melder kann grundsätzlich auch außerhalb des Fahrrads angeordnet sein. Beispielsweise kann die lokale Umgebungstemperatur drahtlos über ein drittes Gerät und/oder aus dem Internet bezogen werden.

Besonders bevorzugt ist der Umgebungstemperatur-Melder in Form eines Temperatur-Sensors an dem Fahrrad vorgesehen, und ist beispielsweise in oder an einem separaten Bediengerät angeordnet. Das Gehäusetemperatur-Steuerungsmodul ist also stets über die lokale Umgebungs-Lufttemperatur Tair außerhalb des Antriebseinheits-Gehäuses informiert.

Das Gehäusetemperatur-Steuerungsmodul begrenzt die maximale elektrische Antriebsenergie Emax in Abhängigkeit von der Lufttemperatur Tair, wenn und solange die von dem Gehäusetemperatur-Melder gemeldete Gehäusetemperatur Th oberhalb der Regelungseingriff-Grenztemperatur Tr liegt. Die Regelungseingriff-Grenztemperatur Tr liegt unterhalb der Gehäuse-Grenztemperatur Tmax.

Die Begrenzung der elektrischen Antriebsenergie auf ein temporäres Maximum bei Annäherung an die Gehäuse-Grenztemperatur Tmax erfolgt also nicht nach einem starren Schema, sondern in Abhängigkeit von der Lufttemperatur Tair. Denn bei niedriger Lufttemperatur ist die Kühlleistung über das durch die Umgebungsluft luftgekühlte Antriebseinheits-Gehäuse erheblich höher als bei relativ hoher Lufttemperatur. Bei niedriger Lufttemperatur Tair wird eine höhere maximale elektrische Antriebsenergie Emax zugelassen, als bei relativ hoher Lufttemperatur. Insbesondere bei relativ niedrigen Umgebungstemperaturen steht damit deutlich mehr maximale elektrische Antriebsenergie Emax zur Verfügung, als bei einer starren konservativen Regelung.

Die Begrenzung der maximalen elektrischen Antriebsenergie erfolgt jedoch grundsätzlich nur, wenn die von dem Gehäusetemperatur-Melder gemessene Gehäusetemperatur Th oberhalb einer Regelungseingriff-Grenztemperatur Tr liegt, die niedriger als die Gehäuse-Grenztemperatur Tmax ist. Die Gehäuse-Grenztemperatur Tmax liegt besonders bevorzugt über 50 °C, und beträgt insbesondere ungefähr 60 °C. Die Regelungseingriff-Grenztemperatur Tr kann vorzugsweise mindestens 5 K unterhalb der Gehäuse-Grenztemperatur Tmax liegen, und liegt besonders bevorzugt mindestens 10K unterhalb der Gehäuse-Grenztemperatur Tmax. Die Regelung berechnet den Temperaturverlauf unter Berücksichtigung eines dynamischen Modells in der Zukunft wobei die Außentemperatur und, in einer bevorzugten Ausführung, die Fahrradgeschwindigkeit in das Modell eingehen. Aus dem Temperaturverlauf der Zukunft entscheidet die Regelung in jedem Zeitschritt, ob ein Eingriff zur Leistungsbeschränkung notwendig ist.

Die Regelungseingriff-Grenztemperatur Tr muss nicht notwendigerweise konstant sein, sondern kann variabel eingestellt werden, insbesondere abhängig von der Lufttemperatur Tair. Die erfindungsgemäße Einstellung der maximalen elektrischen Antriebsenergie Emax in Abhängigkeit von der Lufttemperatur Tair kann also auch dadurch verwirklicht sein, dass die Regelungseingriff-Grenztemperatur Tr bei niedrigen Lufttemperaturen Tair erhöht und bei hohen Lufttemperaturen Tair herabgesetzt wird. Darüber hinaus oder alternativ kann in Abhängigkeit von der Lufttemperatur Tair aber auch der Verlauf der Korrelation zwischen der Gehäusetemperatur Th und der maximalen elektrischen Antriebsenergie Emax angepasst werden.

Vorzugsweise ist ein Neigungssensor vorgesehen, der die Neigung A der Antriebseinheit zur Horizontalebene in der Fahrrad-Längsrichtung angibt. Der Neigungssensor ist vorzugsweise innerhalb des Antriebseinheits-Gehäuses angeordnet oder diesem jedenfalls räumlich fest zugeordnet bzw. an diesem befestigt. Mit dem Neigungssensor wird ermittelt, inwieweit das den Tretlagerantrieb aufweisende Fahrrad aufwärts oder abwärts fährt. Das Gehäusetemperatur-Steuerungsmodul ist über eine Signalverbindung informell mit dem Neigungssensor verbunden und begrenzt die maximale elektrische Antriebsenergie Emax in Abhängigkeit von der von dem Neigungssensor gemeldeten Neigung A der Antriebseinheit bzw. des Fahrrads zur Horizontalebene. So kann beispielsweise bei einem Anstieg die Regelungseingriff-Grenztemperatur Tr herabgesetzt werden, bei einem Abstieg dagegen heraufgesetzt werden. Insbesondere bei einem Anstieg wird dadurch die Wahrscheinlichkeit erhöht, dass ein als sehr unangenehm empfundenes vollständiges Abschalten des Antriebsmotors vermieden werden kann.

Gemäß einer bevorzugten Ausgestaltung sind ein Standort-Empfänger, beispielsweise ein GPS-Empfänger, und ein Streckenprofil-Speicher vorgesehen, in dem das zukünftige Strecken-Höhenprofil gespeichert ist, das anhand einer zuvor erfolgten Zieleingabe und des aktuellen Standorts kontinuierlich neu ermittelt wird. Aus dem zukünftigen Höhenprofil kann das Gehäusetemperatur-Steuerungsmodul den Leistungsbedarf der Antriebseinheit und des Antriebsmotors für die folgenden Minuten genauer abschätzen. Insbesondere kann mit Hilfe des Höhenprofils relativ genau bestimmt werden, wann der hohe Leistungsbedarf beispielsweise bei einem Anstieg voraussichtlich beendet sein wird. Das Steuerungsmodul wird damit in die Lage versetzt, den zeitlichen Verlauf der Entwicklung der Gehäusetemperatur abzuschätzen, und kann daher die maximale elektrische Antriebsenergie so hoch einstellen, dass die Gehäuse-Grenztemperatur annährend exakt erreicht wird oder ist, sobald die Phase eines relativ hohen Leistungsbedarfs von einer Phase eines relativ niedrigen Leistungsbedarfs abgelöst werden wird. Mit Hilfe des zukünftigen bzw. bevorstehenden Höhenprofils ist das Gehäusetemperatur-Steuerungsmodul also in die Lage versetzt, die maximale elektrische Antriebsenergie Emax im zeitlichen Verlauf so zu begrenzen, dass die Gehäusetemperatur Th, soweit erforderlich, die Gehäuse-Grenztemperatur zwar annähernd erreicht, jedoch eine massive Reduzierung der maximalen elektrischen Antriebsenergie Emax nicht erfolgen muss. Die Gehäusetemperatur-bedingten Eingriffe in die verfügbare elektrische Antriebsenergie können also relativ klein gehalten werden, was das subjektive Fahrerlebnis verbessert.

Vorzugsweise weist die Antriebseinheit einen Tretwellen-Drehmomentsensor und einen Fahrer-Tretleistungs-Monitor auf, in dem eine Tretlelstungs-Historie gespeichert ist. Die Tretleistung wird anhand der Tretwellen-Drehzahl und des Tretwellen-Drehmoments kontinuierlich aufgezeichnet, sodass eine Information darüber vorliegt, welche Tretleistung in den zukünftigen Minuten maximal zu erwarten ist. Im einfachsten Fall wird die durchschnittliche Fahrer-Tretleistung der vergangenen Minuten einfach in die Zukunft extrapoliert.

Das Gehäusetemperatur-Steuerungsmodul ist mit dem Tretleistungs-Monitor verbunden und begrenzt die maximale elektrische Antriebsenergie Emax in Abhängigkeit von der Tretleistungs-Historie. So kann beispielsweise bei relativ geringer zu erwartender zukünftiger Fahrer-Tretleistung zusammen mit dem zukünftigen Höhenprofil die maximale elektrische Antriebsenergie Emax auch bei relativ hohen Gehäusetemperaturen Th relativ zurückhaltend begrenzt werden, ohne dass die Gefahr besteht, dass wegen des Erreichens der Gehäuse-Grenztemperatur Tmax dann ein massiver Eingriff in die maximale elektrische Antriebsenergie erforderlich ist.

Gemäß einer bevorzugten Ausgestaltung kann ein Fahrrad-Geschwingkeits-Melder vorgesehen sein, der die aktuelle Fahrrad-Geschwindigkeit V meldet. Das Gehäusetemperatur-Steuerungsmodul kann die maximale Antriebsenergie dann zusätzlich in Abhängigkeit von der Fahrrad-Geschwindigkeit V begrenzen. Bei hoher Fahrrad-Geschwindigkeit ist die Kühlleistung relativ hoch, so dass auch die maximale elektrische Antriebsenergie Emax relativ hoch begrenzt werden kann.

Im Folgenden wird ein Ausführungsbeispiel der Erfindung anhand der Zeichnungen näher erläutert. Es zeigen:
Figur 1 schematisch ein Fahrrad mit einem elektrischen Pedelec-Tretlagerantrieb und einem Bediengerät am Fahrradlenker,
Figur 2 schematisch das Bediengerät und eine Antriebseinheit des Tretlagerantriebs der Figur 1, und
Figur 3 ein Temperatur-Energie-Diagramm.

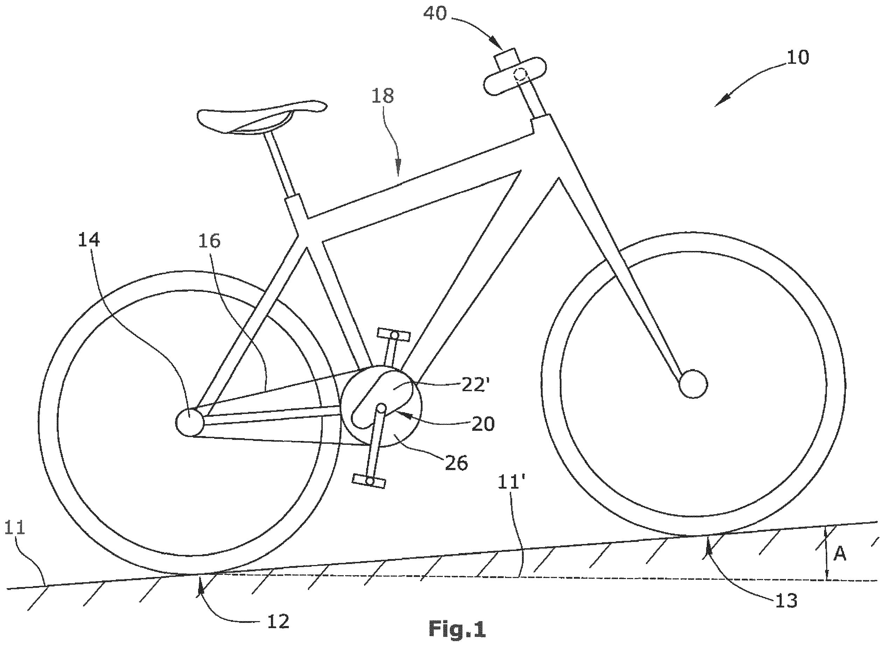

In der Figur 1 ist schematisch ein Fahrrad 10 dargestellt, das an seinem Fahrradrahmen 18 einen Pedelec-Tretlagerantrieb aufweist, der im Wesentlichen aus einer Tretlager-Antriebseinheit 20 und einer Bedieneinheit 40 am Fahrradlenker gebildet ist. Die Antriebseinheit 20 ist vorliegend im Bereich einer Tretwelle 25 angeordnet und nimmt diese teilweise mit auf. An der Tretwelle 25 ist endseitig jeweils eine Tretkurbel 241,242 befestigt, die an ihrem distalen Ende jeweils ein Tretpedal aufweist. Durch die Antriebseinheit 20 wird ein Kettenblatt 26 angetrieben, durch das über eine Fahrradkette 16 ein Hinterrad-Ritzel 14 mechanisch angetrieben wird, durch das das Hinterrad 12 des Fahrrads 10 aktuiert wird. Das Fahrrad 10 weist ferner ein nicht angetriebenes Vorderrad 13 auf.

Das Fahrrad 10 steht vorliegend mit seinen beiden Rädern 12,13 und in Fahrtrichtung gesehen auf einer Aufstandsebene 11 auf, die um eine Neigung A zur Horizontalebene 11' geneigt ist. Im vorliegenden Fall befindet sich das vorwärts fahrende Fahrrad also in einem Anstieg.

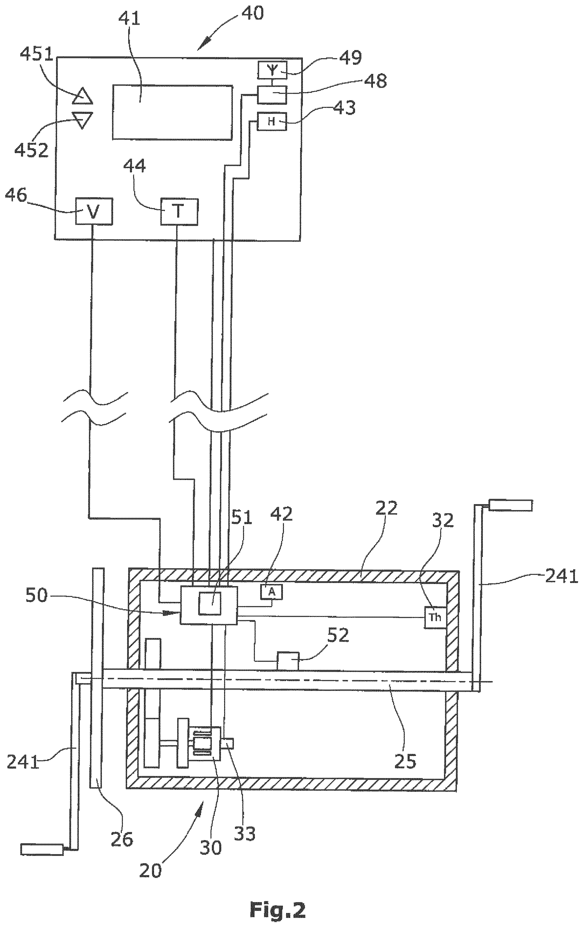

Die in der Figur 2 dargestellte Antriebseinheit 20 weist ein Antriebseinheits-Gehäuse 22 aus Metall, einen in dem Antriebseinheits-Gehäuse 22 angeordneten elektrischen Antriebsmotor 30, mehrere Sensoren 32,33,42,52 und eine elektronische und programmierbare bzw. programmierte Antriebssteuerung 50 auf. In der Antriebssteuerung 50 ist ein Gehäusetemperatur-Steuerungsmodul 51 angeordnet, das als Hardware, im vorliegenden Fall jedoch überwiegend als Software in Form eines Arbeitsprogramms vorliegt.

Der Antriebsmotor 30 treibt über ein Getriebe das Kettenblatt 26 an. Der Antriebsmotor 30 wird von der Antriebssteuerung 50 mit elektrischer Energie versorgt und von dieser entsprechend gesteuert und geregelt. Der Tretwelle 25 ist ein feststehender Tretwellen-Drehmomentsensor 52 zugeordnet, der das von dem Fahrer in die Tretwelle 25 eingebrachte Drehmoment und die Drehgeschwindigkeit der Tretwelle 25 detektiert. Aus dem Tretwellen-Drehmoment und der Tretwellen-Drehgeschwindigkeit wird die aktuelle Fahrer-Tretleistung errechnet, die fortlaufend in einem Fahrer-Tretleistungsmonitor 43 der Bedieneinheit 40 gespeichert wird.

Die Antriebseinheit 20 weist innerhalb des Antriebseinheits-Gehäuses 22 einen Neigungssensor 42 auf, der mechanisch fest mit der Antriebseinheit 20 verbunden ist. Der Neigungssensor 42 ist individuell auf die Einbaulage der Antriebseinheit 20 an dem Fahrradrahmen 18 eingestellt und detektiert die Neigung A der Aufstandsebene 11 des Fahrrads 10 bzw. der Antriebseinheit 20 im Verhältnis zur Horizontalebene 11' in der Fahrrad-Längsrichtung.

Die Antriebseinheit 20 weist innerhalb des Antriebseinheits-Gehäuses 22 ferner einen Gehäusetemperatur-Sensor 32 auf, der thermisch unmittelbar mit dem Gehäuse 22 gekoppelt ist und der die aktuelle Gehäusetemperatur Th der Antriebseinheit 20 detektiert. Der Gehäusetemperatur-Sensor 32 ist an einer Gehäuse-Seitenwand 22' angebracht, die ungefähr in einer Längsebene des Fahrrads 10 liegt und die an eine Tretkurbel 241 angrenzt bzw. zu dieser benachbart ist.

Schließlich weist die Antriebseinheit 20 noch einen Motortemperatur-Sensor 33 auf, der in dem Antriebsmotor 30 oder an dem Antriebsmotor 30 angebracht ist und die Motortemperatur detektiert. Unter der Motortemperatur kann vorliegend die Temperatur der Motorspulen verstanden werden, jedoch alternativ auch die Gehäusetemperatur des Antriebsmotors 30.

Alle Sensoren 32,33,42,52 des Antriebsmotors 20 sind informell mit der Antriebssteuerung 50 bzw. dem Gehäusetemperatur-Steuerungsmodul 51 über entsprechende Signalleitungen verbunden.

Die Bedieneinheit 40 weist ein Display 41 und zwei Taster 451,452 zur Erhöhung und Verringerung des generellen Antriebs- Unterstützungsgrads einer Grundregelung auf.

Die Bedieneinheit 40 weist ferner einen Standort-Empfänger 49 und einen Streckenprofil-Speicher 48 auf. Der Standort-Empfänger 49 ist vorliegend ein GPS-Empfänger, mit dem der aktuelle Standort mit bestmöglicher Genauigkeit bestimmt wird. Ferner weist die Bedieneinheit 40 ein Navigationsprogramm auf, in das der Fahrer sein Fahrtziel eingeben und aus mehreren Routenvorschlägen eine Fahrroute auswählen kann. Anhand der vom Fahrer ausgewählten Fahrtroute, des hieraus generierten Streckenprofils und des aktuellen Standorts wird das Höhenprofil H der folgenden beispielsweise 30 Minuten ermittelt und in dem Streckenprofil-Speicher abgespeichert. In dem Streckenprofil-Speicher 48 sind das gesamte Streckenprofil und das zukünftige Höhenprofil H gespeichert. Das Höhenprofil H ist kein absolutes Höhenprofil, sondern ein relatives Höhenprofil, in dem für den aktuellen Standort die Höhe Null angenommen wird. Denn das Höhenprofil H dient ausschließlich dazu, den zukünftigen Antriebs-Energiebedarf abzuschätzen.

Die Bedieneinheit 40 weist einen Geschwindigkeits-Melder 46 auf, der die aktuelle Fahrrad-Geschwindigkeit V meldet. Die aktuelle Fahrrad-Geschwindigkeit kann beispielsweise der Standort-Empfänger 49 zur Verfügung stellen, kann aber auch aus der Tretwellen-Drehzahl und der Gesamt-Übersetzung oder durch einen radseitigen Drehzahl-Sensor am Vorder- oder Hinterrad ermittelt werden.

Ferner weist die Bedieneinheit 40 einen Umgebungstemperatur-Melder 44 in Form eines Temperatur-Sensors auf, der die aktuelle Lufttemperatur Tair der Umgebung misst. Alternativ kann die aktuelle Umgebungstemperatur Tair am Fahrrad-Standort auch drahtlos über das Internet bezogen werden.

Schließlich weist die Bedieneinheit 40 einen Fahrer-Tretleistungsmonitor 43 auf, in dem die vergangene Fahrer-Tretleistung im zeitlichen Verlauf bzw. im räumlichen Verlauf hinterlegt ist. Die Fahrer-Tretleistung wird mit Hilfe des Tretwellen-Drehmomentsensors 52 ermittelt.

Der Tretlagerantrieb arbeitet wie folgt:
Vor Fahrtantritt gibt der Fahrer in die Bedieneinheit 40 ein Ziel ein, und wählt aus den anschließend zur Auswahl angebotenen Routenvorschlägen die gewünschte Fahrroute aus, aus der sich das gesamte Streckenprofil und das unmittelbar bevorstehende relative Höhenprofil H ergibt, das in dem Streckenprofil-Speicher 48 abgespeichert wird.

Der Unterstützungsgrad der Antriebseinheit 20 gemäß einer Grundregelung wird mit Hilfe der Taster 451,452 aus beispielsweise fünf abgestuften Unterstützungsgraden ausgewählt. Der jeweilige Unterstützungsgrad kann beispielsweise jeweils linear proportional zur Fahrer-Tretleistung bzw. zum Fahrer-Drehmoment festgelegt sein.

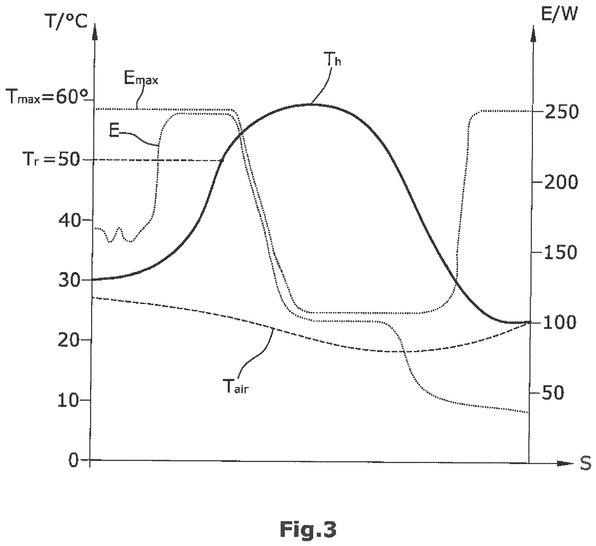

Das Gehäusetemperatur-Steuerungsmodul 51 überprüft fortlaufend, ob die Gehäusetemperatur Th oberhalb einer Regelungseingriffs-Grenztemperatur Tr von vorliegend 50°C liegt. Solange die Gehäusetemperatur Th der Antriebseinheit 20 nicht oberhalb der Regelungseingriff-Grenztemperatur Tr liegt, erfolgt kein Eingriff in die Grundregelung in Form einer Begrenzung der maximalen elektrischen Antriebsenergie Emax auf unter 250W, mit der die Antriebssteuerung 50 den Antriebsmotor 30 mit elektrischer Energie versorgt. Wenn sich die Gehäusetemperatur Th auf über 50°C erhöht, greift das Gehäusetemperatur-Steuerungsmodul 51 ein, und begrenzt die maximale elektrische Antriebsenergie Emax, wie in dem Diagramm der Figur 3 erkennbar ist. Dieser Eingriff überlagert bzw. beschränkt die Grundregelung. Alternativ kann der momentenbilde Strom entsprechend begrenzt werden. Damit wird indirekt die Leistung begrenzt.

Ab dem Punkt, an dem die Gehäusetemperatur Th 50°C überschreitet, wird die zulässige maximale elektrische Antriebsenergie Emax für die Grundregelung von 250 W sukzessive auf 100 W reduziert, um den Anstieg der Erwärmung der Gehäusetemperatur TH zu verlangsamen bzw. zu verringern. Der Grad der Begrenzung der maximalen elektrischen Antriebsenergie Emax wird hierbei unmittelbar von der Lufttemperatur Tair beeinflusst. Je niedriger die Lufttemperatur Tair ist, desto höher ist die maximale elektrische Antriebsenergie Emax. In dem Diagramm der Figur 3 ist beispielsweise zu Beginn eine Lufttemperatur Tair von 26,6 °C angenommen. Da das Fahrrad dann eine Steigung befährt, steigt die tatsächliche Antriebsleistung E auf 250 W, bis durch die thermische Verlustleistung in der Antriebseinheit 20 die Gehäusetemperatur Th auf 50 °C und darüber hinaus ansteigt. Der Anstieg des Fahrrads spiegelt sich auch im Verlauf der Lufttemperatur Tair wieder, die mit zunehmender Höhe sinkt, was vorliegend übertrieben dargestellt ist. Grundsätzlich wird die maximale elektrische Antriebsenergie Emax jedoch stets in Abhängigkeit von der Lufttemperatur Tair begrenzt. Bei relativ niedrigen Lufttemperaturen Tair wird die maximale elektrische Antriebsenergie Emax relativ hoch festgelegt, und wird bei relativ hohen Lufttemperaturen Tair relativ niedrig festgelegt, da die Kühlleistung in Bezug auf das Antriebseinheits-Gehäuse 22 bei hohen Lufttemperaturen Tair erheblich verschlechtert ist. Ferner geht die aktuelle Fahrrad-Geschwindigkeit V in Festlegung der maximalen elektrischen Antriebsenergie Emax mit ein.

Das Gehäusetemperatur-Steuerungsmodul 51 bezieht ferner aus dem Tretleistungsmonitor 43 die zurückliegende Tretleistungs-Historie des betreffenden Fahrers. Dies kann beispielsweise die Tretleistung-Historie der vergangenen 30 Minuten sein, aus der sich beispielsweise ein Tretleistungs-Durchschnittswert errechnen lässt. Je höher die Tretleistung des betreffenden Fahrers war, desto niedriger wird die maximale elektrische Antriebsenergie Emax festgelegt, da davon ausgegangen wird, dass durch die Grundregelung über die Zeit integriert mehr elektrische Gesamtleistung abgefragt und erbracht werden wird, als bei einem niedrigeren historischen Tretleistungs-Durchschnittswert.

Das Gehäusetemperatur-Steuerungsmodul 51 bezieht ferner die aktuelle Neigung A des Fahrrads 10 von dem Neigungssensor 42, aus der sich ebenfalls Rückschlüsse auf den zukünftigen Antriebs-Leistungsbedarf ziehen lassen. Bei einem Fahrrad-Anstieg wird angenommen, dass durch die Grundregelung ständig eine relativ hohe elektrische Antriebsleistung abgefragt wird, sodass die maximale elektrische Antriebsenergie Emax niedriger eingestellt wird, als wenn die aktuelle Neigung A beispielsweise 0° beträgt, das Fahrrad also in der Ebene bewegt wird, wofür über die Grundregelung allenfalls kurzzeitig eine hohe Antriebsleistung abgefragt werden wird.

Das Gehäusetemperatur-Steuerungsmodul 51 bezieht das zukünftige Höhenprofil H von dem Streckenprofil-Speicher 48. Hiermit lässt sich eine echte prädiktive Regelung realisieren, so dass die Annäherung der Gehäusetemperatur Th an die Gehäuse-Grenztemperatur Tmax dahingehend verfeinert wird, dass die Gehäuse-Grenztemperatur Tmax erst dann erreicht wird, wenn anschließend kein energiezehrender Anstieg mehr zu erwarten ist. In jedem Fall begrenzt das Gehäusetemperatur-Steuerungsmodul 51 die maximale elektrische Antriebsenergie Emax in Abhängigkeit von dem zukünftigen Höhenprofil H.

Das Gehäusetemperatur-Steuerungsmodul 51 kann alternativ auch in der Bedieneinheit 40 angesiedelt sein.

## Patentansprüche

1. Elektrischer Pedelec-Tretlagerantrieb für ein Fahrrad (10), mit einer Antriebseinheit (20) mit einem unterstützenden elektrischen Antriebmotor (30) in einem Antriebseinheits-Gehäuse (22), dem ein Gehäusetemperatur-Sensor (32) thermisch zugeordnet ist, und einer Antriebssteuerung (50), die den Antriebsmotor (30) mit elektrischer Antriebsenergie versorgt,
wobei die Antriebssteuerung (50) ein Gehäusetemperatur-Steuerungsmodul (51) aufweist, das mit dem Gehäusetemperatur-Sensor (32) verbunden ist und das die elektrische Antriebsenergie (E) derart steuert, dass eine Gehäuse-Grenztemperatur (Tmax) nicht überschritten wird,
**dadurch gekennzeichnet, dass**
ein Umgebungstemperatur-Melder (44) außerhalb des Antriebseinheits-Gehäuses (22) vorgesehen ist, der die Lufttemperatur (Tair) außerhalb des Antriebseinheits-Gehäuses (22) meldet und der mit dem Gehäusetemperatur-Steuerungsmodul (51) verbunden ist, und
das Gehäusetemperatur-Steuerungsmodul (51) die maximale elektrische Antriebsenergie (Emax) in Abhängigkeit von der Lufttemperatur (Tair) begrenzt, wenn die von dem Gehäusetemperatur-Melder (33) gemeldete Gehäusetemperatur (Th) oberhalb einer Regelungseingriff-Grenztemperatur (Tr) liegt, die unterhalb der Gehäuse-Grenztemperatur (Tmax) liegt.

2. Elektrischer Pedelec-Tretlagerantrieb nach Anspruch 1, wobei die Regelungseingriff-Grenztemperatur (Tr) mindestens 5 Kelvin unterhalb der Gehäuse-Grenztemperatur (Tmax) liegt, besonders bevorzugt mindestens 10 Kelvin.

3. Elektrischer Pedelec-Tretlagerantrieb nach einem der vorangegangenen Ansprüche, wobei die Gehäuse-Grenztemperatur (Tmax) über 323,15 Kelvin liegt, und besonders bevorzugt ungefähr 333,15 Kelvin beträgt.

4. Elektrischer Pedelec-Tretlagerantrieb nach einem der vorangegangenen Ansprüche, wobei ein Neigungssensor (42) vorgesehen ist, der die Neigung (A) der Aufstandsebene (11) der Antriebseinheit (20) zur Horizontalebene (11') in der Fahrrad-Längsrichtung angibt, und wobei das Gehäusetemperatur-Steuerungsmodul (51) mit dem Neigungssensor (42) verbunden ist und die maximale elektrische Antriebsenergie (Emax) in Abhängigkeit von der Neigung (A) begrenzt.

5. Elektrischer Pedelec-Tretlagerantrieb nach einem der vorangegangenen Ansprüche, wobei ein Standort-Empfänger (49) und ein Streckenprofil-Speicher (48) vorgesehen sind, in dem das zukünftige Höhenprofil (H) gespeichert ist,
wobei das Gehäusetemperatur-Steuerungsmodul (51) mit dem Neigungssensor (42) verbunden ist und die maximale elektrische Antriebsenergie (Emax) in Abhängigkeit von dem zukünftigen Höhenprofil (H) begrenzt.

6. Elektrischer Pedelec-Tretlagerantrieb nach einem der vorangegangenen Ansprüche, wobei die Antriebseinheit (20) einen Tretwellen-Drehmomentsensor (52) aufweist und ein Fahrer-Tretteistungsmonitor (43) vorgesehen ist, in dem eine Tretleistungs-Historie gespeichert ist, und
wobei das Gehäusetemperatur-Steuerungsmodul (51) mit dem Tretleistungsmonitor (43) verbunden ist und die maximale elektrische Antriebsenergie (Emax) in Abhängigkeit von der Tretleistungs-Historie begrenzt.

## Claims

1. Electric pedelec bottom bracket drive for a bicycle (10), having a drive unit (20) with a supporting electric drive motor (30) in a drive unit housing (22) to which a housing temperature sensor (32) is thermally associated, and
a drive controller (50) supplying electrical drive energy to the drive motor (30),
the drive controller (50) having a housing temperature control module (51) which is connected to the housing temperature sensor (32) and which controls the electrical drive energy (E) in such a way that a housing limit temperature (Tmax) is not exceeded,
**characterised in that**
an ambient temperature detector (44) is provided outside the drive unit housing (22), which detects the air temperature (Tair) outside the drive unit housing (22) and which is connected to the housing temperature control module (51), and
the housing temperature control module (51) limits the maximum electrical drive energy (Emax) as a function of the air temperature (Tair) when the housing temperature (Th) signalized by the housing temperature detector (33) is above a control intervention limit temperature (Tr) which is below the housing limit temperature (Tmax).

2. Electric pedelec bottom bracket drive according to claim 1, wherein the control intervention limit temperature (Tr) is at least 5 Kelvin below the housing limit temperature (Tmax), particularly preferably at least 10 Kelvin.

3. Electric pedelec bottom bracket drive according to any one of the preceding claims, wherein the housing limit temperature (Tmax) is above 323,15 Kelvin, and particularly preferably about 333,15 Kelvin.

4. Electric pedelec bottom bracket drive according to any one of the preceding claims, wherein an inclination sensor (42) is provided which indicates the inclination (A) of the contact plane (11) of the drive unit (20) to the horizontal plane (11') in the longitudinal direction of the bicycle, and
wherein the housing temperature control module (51) is connected to the inclination sensor (42) and limits the maximum electrical drive energy (Emax) as a function of the inclination (A).

5. an electric pedelec bottom bracket drive according to any one of the preceding claims, wherein a location receiver (49) and a trip profile memory (48) are provided in which the future elevation profile (H) is stored,
wherein the housing temperature control module (51) is connected to the inclination sensor (42) and limits the maximum electrical drive energy (Emax) in dependence on the future altitude profile (H).

6. an electric pedelec bottom bracket drive according to any one of the preceding claims, wherein the drive unit (20) comprises a pedal shaft torque sensor (52), and a rider pedal energy monitor (43) is provided in which a pedal energy history is stored, and
wherein the housing temperature control module (51) is connected to the pedal energy monitor (43) and limits the maximum electrical drive energy (Emax) in response to the pedal energy history.

## Revendications

1. Entrainement de pédalier électrique pour pedelec (10), comprenant une unité d'entrainement (20) avec un moteur d'entrainement électrique de support (30) dans un carter d'unité d'entrainement (22) auquel un capteur de température de carter (32) est associé thermiquement, et
une commande d'entrainement (50) alimentant le moteur d'entrainement (30) en énergie d'entrainement électrique,
la commande d'entrainement (50) comprenant un module de commande de température de carter (51) relié au capteur de température du carter (32) et qui commande l'énergie d'entrainement électrique (E) de sorte qu'une température limite de carter (Tmax) ne soit pas dépassée,
**caractérisé en ce qu'**
un détecteur de température ambiante (44) est prévu en dehors du carter d'unité d'entrainement (22), qui indique la température de l'air (Tair) en dehors du carter d'unité d'entrainement (22) et qui est relié au module de commande de température du carter (51), et
le module de commande de température de carter (51) limite l'énergie d'entrainement électrique maximale (Emax) en fonction de la température de l'air (Tair) si la température du carter (Th) indiqué par le détecteur de température de carter (33) est supérieure à une température limite pour intervention de régulation (Tr) inférieure à la température de la température limite du carter (Tmax).

2. Entrainement de pédalier électrique pour pedelec selon la revendication 1, dans lequel la température limite pour intervention de régulation (Tr) est d'au moins 5 Kelvin en dessous de la température limite du carter (Tmax), de manière particulièrement préférée d'au moins 10 Kelvin.

3. Entrainement de pédalier électrique pour pedelec selon l'une quelconque des revendications précédentes, dans lequel la température limite du carter (Tmax) est supérieure à 323,15 Kelvin, et de manière particulièrement préférée est environ 333,15 Kelvin.

4. Entrainement de pédalier électrique pour pedelec selon l'une quelconque des revendications précédentes, dans lequel un capteur d'inclinaison (42) est prévu indiquant l'inclinaison (A) du plan de contact (11) de l'unité d'entrainement (20) par rapport au plan horizontal (11') dans la direction longitudinale du vélo, et
le module de commande de la température du carter (51) est connecté au capteur d'inclinaison (42) et limite l'énergie d'entrainement électrique maximale (Emax) en fonction de l'inclinaison (A).

5. Entrainement de pédalier électrique pour pedelec selon l'une quelconque des revendications précédentes, dans lequel un récepteur de position (49) et une mémoire de profil de piste (48) sont prévus, dans lesquels le futur profil d'hauteur (H) est stocké, le module de commande de température du carter (51) étant relié au capteur d'inclinaison (42) et limitant l'énergie d'entrainement électrique maximale (Emax) en fonction du profil futur d'hauteur (H).

6. Entrainement de pédalier électrique pour pedelec selon l'une quelconque des revendications précédentes, dans lequel l'unité d'entrainement (20) comprend un capteur de couple d'arbre de pédale (52) et un moniteur de puissance de pédalage du cycliste (43) est prévu, dans lequel un historique de puissance de pédalage est stocké, et
le module de commande de température de carter (51) étant connecté au moniteur de puissance de pédalage (43) et limitant l'énergie d'entrainement électrique maximale (Emax) en fonction de l'historique de la puissance de pédalage.
